Europäisches Patentamt

European Patent Office

Office européen des brevets

(19)

(11) Numéro de publication : **0 424 246 B1**

# (12) FASCICULE DE BREVET EUROPEEN

(45) Date de publication du fascicule du brevet :
**29.12.93 Bulletin 93/52**

(51) Int. Cl.⁵ : **C02F 1/72, G21F 9/06,
C02F 1/461**

(21) Numéro de dépôt : **90402896.6**

(22) Date de dépôt : **16.10.90**

(54) **Procédé pour éliminer des substances organiques en solution ou en suspension dans une solution aqueuse, telle qu'un effluent radioactif.**

(30) Priorité : **18.10.89 FR 8913608**

(43) Date de publication de la demande :
**24.04.91 Bulletin 91/17**

(45) Mention de la délivrance du brevet :
**29.12.93 Bulletin 93/52**

(84) Etats contractants désignés :
**BE DE ES GB**

(56) Documents cités :
**EP-A- 0 297 738
AICHE SYMPOSIUM SERIES, vol. 75, no. 185, 1979, pages 45-50, ISBN 65-8812-79-1053-0185, The American Institute of Chemical Engineers, US; N. IBL et al.: "Prospects for the indirect electrolytic oxidation of organics"
CHEMICAL ABSTRACTS, vol. 76, no. 12, 20 mars 1972, page 565, résumé no. 67330v, Columbus, Ohio, US; D. PLETCHER et al.: "Oxidation of organic compounds at a cobalt electrode in alkaline media", & J. ELECTROANAL. CHEM. INTERFACIAL ELECTROCHEM. 1971, 33(2), 478-9**

(56) Documents cités :
**CHEMICAL ABSTRACTS, vol. 94, no. 16, 20 avril 1981, page 530, résumé no. 129397e, Columbus, Ohio, US; A. BEWICK et al.: "Electrochemical generation and use of cobalt(III) acetate", & SYNTH. COMMUN. 1981, 11(2), 133-7
DATABASE WPIL, no. 86-165082 [26], Derwent Publications Ltd, Londres, GB; & JP-A-61 097 114 (JGC CORP.) 15-05-1986
DATABASE WPIL, no. 84-098385 [16], Derwent Publications Ltd, Londres, GB; & JP-A-59 044 698 (EBARA)**

(73) Titulaire : **COMMISSARIAT A L'ENERGIE ATOMIQUE Etablissement de Caractère Scientifique Technique et Industriel 31/33, rue de la Fédération F-75015 Paris (FR)**

(72) Inventeur : **Cordero, Guy
15 Résidence du Clos E
F-91370 Verrieres le Buisson (FR)**
Inventeur : **Gauthier, Frédérique
8Bis, rue de l'Arrivée
F-75015 Paris (FR)**
Inventeur : **Perotin, Jean-Pierre
22 rue Auguste Comte, Résidence Aquitaine
F-92170 Vanves (FR)**
Inventeur : **Saulze, Jean-Louis
7 rue Jeanne d'Arc
F.91300 Massy (FR)**

(74) Mandataire : **Mongrédien, André et al
c/o BREVATOME 25, rue de Ponthieu
F-75008 Paris (FR)**

EP 0 424 246 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un procédé pour éliminer les substances organiques présentes en solution ou en suspension dans une solution aqueuse.

De façon plus précise, elle concerne un procédé permettant de détruire des substances organiques dissoutes ou non dans une solution aqueuse. La solution aqueuse peut être en particulier un effluent provenant d'une installation nucléaire.

Les substances organiques peuvent être des matières organiques toxiques, des germes pathogènes ou encore des agents complexants tels que les acides carboxyliques et hydroxycarboxyliques comme l'acide oxalique, l'acide citrique, l'acide tartrique et l'acide éthylène diamide tétracétique (EDTA), qui sont souvent utilisés dans les traitements de décontamination de liquides radioactifs et que l'on retrouve de ce fait dans les effluents aqueux provenant des installations nucléaires.

Ces effluents aqueux radioactifs sont généralement traités par enrobage de leurs sels dans du bitume. Cependant, dans le cas où ces effluents contiennent des complexants organiques tels que ceux mentionnés ci-dessus, ce traitement est difficile à mettre en oeuvre car ces complexants nuisent à l'insolubilisation des sels et il est nécessaire d'envisager l'élimination de ces complexants avant de réaliser le traitement final d'enrobage.

Les techniques connues pour éliminer ces substances organiques sont, soit des techniques chimiques, soit des techniques électrochimiques. Les techniques chimiques sont basées sur l'emploi d'agents oxydants forts permettant de détruire les substances organiques par oxydation. Les oxydants forts utilisés peuvent être l'ozone, l'eau oxygénée, l'eau de javel, l'acide nitrique ou encore l'acide sulfurique concentré, mais l'emploi de ces agents oxydants conduit à des risques et à des difficultés qui alourdissent considérablement les installations et les rendent peu adaptées au traitement d'effluents radioactifs.

Les techniques électrochimiques peuvent consister en une électrolyse directe des effluents mais ceci ne permet de détruire que les molécules solubles électroactives. Ainsi, cette technique ne peut être utilisée pour la destruction d'agents complexants tels que l'acide citrique et l'acide tartrique.

EP-A-0 297 738 décrit le traitement des déchets organiques liquides ou solides en les oxydant au moyen d'espèces oxydantes produites à partir d'ions argent par électrolyse. Dans ce procédé, même si la possibilité d'utiliser des ions cobalt est indiquée, la présence des ions argent est nécessaire.

Ainsi, jusqu'à présent, il n'existe aucun procédé sur et facile à mettre en oeuvre pour détruire ces complexants organiques avant de réaliser le traitement final des effluents aqueux.

La présente invention a précisément pour objet un procédé de traitement d'une solution aqueuse contenant en solution ou en suspension au moins une substance organique, qui permet d'éliminer quantitativement cette (ces) substance(s) organique(s) tout en étant facile à mettre en oeuvre dans une installation nucléaire.

Selon l'invention, le procédé de traitement d'une solution aqueuse contenant en solution ou en suspension au moins une substance organique choisie parmi les germes pathogènes et les agents complexants, comprend une étape de destruction de cette(ces) substance(s) organique(s) par oxydation uniquement au moyen de $Co^{3+}$.

Selon un mode préféré de mise en oeuvre de ce procédé, on régénère en continu par électrolyse les ions $Co^{3+}$ nécessaires à l'oxydation. Dans ce cas, on ajoute tout d'abord à la solution aqueuse un sel de cobalt (II) soluble dans cette solution et on soumet la solution contenant le sel de cobalt (II) à une électrolyse pour générer en continu par électrolyse les ions $Co^{3+}$ nécessaires à l'oxydation des substances organiques.

Les sels de cobalt utilisables peuvent être de différents types mais on préfère bien entendu utiliser un sel inorganique de cobalt, par exemple du nitrate ou du sulfate de cobalt (II), de préférence du nitrate.

La quantité de sel de cobalt ajoutée à la solution doit être suffisante pour que l'on maintienne en solution une quantité suffisante d'ions $Co^{3+}$.

A titre d'exemple, on peut obtenir de bons résultats avec des concentrations en cobalt de la solution aqueuse de 0,05 à 0,5 mol/l.

Pour cette électrolyse, la solution aqueuse a de préférence un pH inférieur à 1. Aussi, si nécessaire, on ajuste le pH de cette solution à la valeur voulue par addition d'un acide tel que l'acide nitrique ou l'acide sulfurique.

Dans le procédé de l'invention, le couple $Co^{3+}/Co^{2+}$ sert de transporteur d'électrons des substances organiques vers l'anode de l'électrolyseur. En effet, dans le cas où la substance organique est l'acide citrique ou l'acide tartrique, la destruction de ces acides par oxydation au moyen de $Co^{3+}$ peut s'écrire de la façon suivante :

$$C_6H_8O_7 + 5H_2O + 18Co^{3+} \rightarrow 6CO_2 + 18H^+ + 18Co^{2+}$$
$$C_4H_6O_6 + 2H_2O + 10Co^{3+} \rightarrow 4CO_2 + 10H^+ + 10Co^{2+}$$

Ces réactions produisent donc des ions $Co^{2+}$ qui peuvent être ensuite convertis en ions $Co^{3+}$ sur l'anode, selon le schéma suivant :

$$Co^{2+} \rightarrow Co^{3+} + e^-$$

Le choix du cobalt pour assurer ce transport d'électrons est particulièrement intéressant car les cinétiques de réaction du cobalt avec les complexants organiques sont rapides à la température ambiante si bien que pour la plupart des substances organiques, c'est la régénération du cobalt (III) qui limite les vitesses de destruction des substances organiques.

Aussi, pour obtenir une vitesse élevée de destruction des substances organiques, il est important d'obtenir le meilleur rendement faradique de régénération du $Co^{3+}$. Ce rendement dépend principalement de la densité de courant anodique et de la concentration en cobalt de la solution.

De façon empirique, on a déterminé que le rendement faradique de régénération du $Co^{3+}$ est proche de l'unité lorsque le facteur F défini par la formule

$$F = \frac{I}{S[Co(II)]}$$

dans laquelle I est l'intensité du courant, S est la surface de l'anode, et [Co(II)] est la concentration de cobalt (II) en solution, est inférieur à une valeur limite qui dépend de la cellule électrolytique, du brassage et de la température utilisés.

Le facteur limite à ne pas dépasser peut aisément se mesurer, en réalisant une série de 4 à 5 expériences pour lesquelles de l'une à l'autre on fera varier la concentration d'ions cobalt (II) toutes conditions par ailleurs égales (surface d'anode, intensité d'électrolyse, milieu d'électrolyse, vitesse d'agitation, température, géométrie de l'électrolyseur... ).

Pour chacune de ces expériences, la concentration de l'espèce organique à détruire est suivie et le rendement faradique de destruction R qui correspond au rapport du nombre de coulombs utilisés au nombre de coulombs nécessaire pour détruire une molécule de la substance organique, est calculé à partir de la formule :

$$R = \frac{n \times x \times 96490 \times 100}{I \times t} \text{ (en \%)}$$

dans laquelle :
- n est le nombre de molécules de substance organique détruites au bout du temps t,
- x est le nombre d'électrons mis en jeu dans la demi-équation d'oxydation quantitative de la molécule organique (18 pour l'acide citrique, 2 pour l'acide oxalique),
- I est l'intensité d'électrolyse (en A), et
- t est la durée d'électrolyse (en s).

On porte ensuite sur un graphique les valeurs du rendement faradique en fonction de la concentration en Co (II).

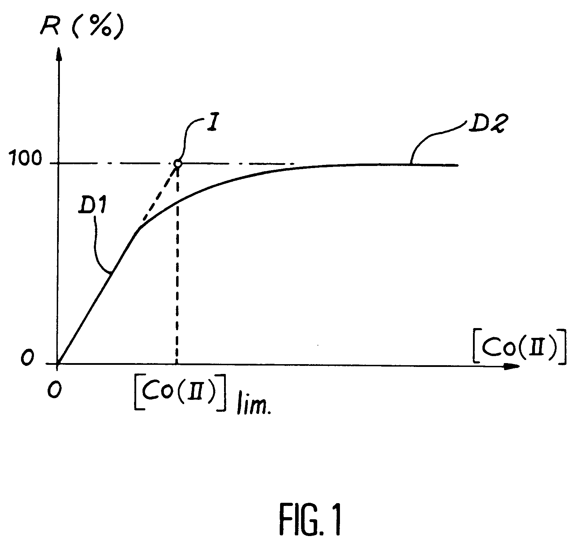

La figure 1 représente la courbe obtenue.

Sur cette figure, on peut déterminer la concentration [Co (II)] limite qui est l'abscisse du point singulier d'intersection I entre la droite D1, qui correspond à l'origine de la courbe, et la droite horizontale D2 d'équation rendement = 100 %.

Le point Co (II) limite permet le calcul de la constante $F_{limite}$ à ne pas dépasser.

$$F_{limite} = \frac{I}{S_{anode}[Co(II)] \text{ limite}}$$

(exprimée en $Acm^{-2} M^{-1}$)
où I est l'intensité d'électrolyse identique pour toutes les expériences (exprimée en A).

$S_{anode}$ est la surface d'anode (exprimée en $cm^2$).

Co (II)$_{limite}$ est l'abscisse du point singulier de la courbe ci-dessus.

Les valeurs de $F_{limite}$ sont souvent comprises entre 0,5 et $1 Acm^{-2} M^{-1}$ pour la génération de Co (III).

Aussi, pour la régénération électrolytique on choisit l'intensité du courant en fonction de la surface de l'anode et de la concentration en Co(II) pour ne pas dépasser cette valeur limite.

Le procédé de l'invention présente de nombreux avantages. En effet, on peut opérer à la température ambiante, on peut régénérer le cobalt (III) en continu au sein du milieu réactionnel avec un rendement faradique proche de 1, et on peut utiliser divers milieux réactionnels tels que l'acide sulfurique et l'acide nitrique, en concentrations variables.

Toutefois, pour la mise en oeuvre du procédé de l'invention, il est bon de s'assurer que la solution aqueuse à traiter ne comprend pas ou ne comprend plus de composés organiques susceptibles de réagir avec le cobalt en formant un précipité. C'est en particulier le cas des composés organiques tels que l'acide oxalique.

Aussi, lorsque la solution aqueuse de départ contient de tels composés, on réalise un prétraitement pour éliminer ceux-ci avant d'effectuer l'étape de destruction par oxydation au moyen de $Co^{3+}$.

Dans ce cas, on soumet tout d'abord la solution à une électrolyse pour éliminer par oxydation électrochimique le (les) composé(s) organique(s) capable(s) de réagir avec le sel de cobalt en formant un précipité. Ceci peut être effectué dans un électrolyseur comprenant une anode et une cathode en titane revêtues de platine, à la température ambiante ou à une température légèrement supérieure, en soumettant la solution à une agitation, avec des densités de courant qui peuvent varier de 0,03 à 0,3 $A/cm^2$.

Pour réaliser cette électrolyse, il faut aussi ajuster le pH de la solution aqueuse de façon appropriée.

De préférence, on opère à un pH acide, par exemple inférieur à 1, et à la température ambiante, comme dans le cas de la régénération électrolytique des ions $Co^{3+}$.

Pour une exploitation du procédé à l'échelle industrielle, celui-ci comprend donc de préférence les étapes successives suivantes :

1°) ajouter à la solution aqueuse de départ contenant en suspension ou en solution au moins une substance organique de l'acide nitrique ou de l'acide sulfurique pour ajuster son pH à une valeur inférieure à 1,

2°) soumettre la solution ainsi traitée à une électrolyse sous agitation pour éliminer le (les) composé(s) organique(s) éventuellement présents qui seraient capables de réagir avec un sel de cobalt en donnant un précipité de cobalt,

3°) ajouter un sel de cobalt à la solution ainsi électrolysée, et

4°) soumettre la solution aqueuse à laquelle on a ajouté le sel de cobalt, à une électrolyse pendant une durée suffisante pour détruire quantitativement la (les) substance(s) organique(s) qu'elle contient.

Le procédé de l'invention peut être mis en oeuvre dans un appareillage d'électrolyse classique, par exemple un électrolyseur comportant des électrodes en titane revêtues de platine, muni de moyens d'agitation et éventuellement séparé en deux compartiments par une membrane frittée.

Il peut être utilisé pour détruire les substances organiques potentiellement oxydables par Co (III), notamment l'acide citrique et l'acide tartrique.

D'autres caractéristiques et avantages de l'invention apparaîtront mieux à la lecture des exemples suivants donnés bien entendu à titre illustratif et non limitatif, en référence au dessin annexé sur lequel :

- la figure 1, déjà décrite, est un graphique représentant le rendement faradique en fonction de la concentration en Co (II),
- la figure 2 représente les variations du rendement faradique de régénération du Co(III) en fonction de la concentration en acide sulfurique de la solution aqueuse,
- la figure 3 représente les variations de rendement faradique de régénération du Co(III) en fonction de la concentration en Co(II), et
- la figure 4 représente les variations du rendement faradique de régénération du Co(III) en fonction de l'intensité d'électrolyse.

**Exemple 1** : Traitement d'une solution aqueuse contenant 0,1mol/l d'acide citrique.

Dans cet exemple, on utilise une installation de traitement comprenant les éléments suivants :
- une cuve de mélange en inox,
- une pompe de circulation alimentant un réacteur de traitement électrochimique constitué de grilles métalliques superposées et polarisées (10 anodes et 10 cathodes montées en série) qui sont en titane platiné et ont une surface correspondante à environ 2,16dm$^2$,
- un redresseur de courant : 50A/12V,
- des raccordements hydrauliques et électriques, et
- un montage avec platine.

On ajoute tout d'abord à la solution aqueuse de l'acide sulfurique de façon à obtenir une concentration en acide sulfurique de la solution de 1mol/l.

On introduit ensuite cette solution dans le réacteur de traitement électrolytique et on agite la solution au moyen de la pompe à recirculation. On ajoute à la solution du nitrate de cobalt (II) de façon à obtenir une concentration en cobalt de 0,3mol/l, puis on applique aux électrodes une tension de façon à obtenir un courant électrolytique constant de 30A et on régule la température de la solution dans la cellule à une valeur de 25±5°C.

Après 100min d'électrolyse, on détermine la teneur en acide citrique de la solution par dosage au moyen d'une solution de sulfate de cérium et d'une solution de sel de Mohr.

Le cérium(IV) oxyde l'acide citrique et l'excès de cérium est dosé en retour par le sel de Mohr à l'aide d'un potentiomètre. On constate ainsi que l'acide citrique a été totalement détruit.

**Exemple 2.**

On traite 100ml d'une solution aqueuse contenant 0,1mol/l d'acide citrique et 2mol/l d'acide sulfurique à laquelle on ajoute du nitrate de cobalt (II) pour obtenir une concentration en cobalt de 0,1mol/l, et on l'électrolyse dans une cellule comportant une anode en platine de 15cm$^2$ de surface et une cathode constituée par un fil de platine ayant une longueur de 1cm et un diamètre de 0,1 cm. La température est de 20°C et l'on agite constamment le milieu réactionnel au moyen d'un barreau aimanté.

En réalisant l'électrolyse sous le régime intensiostatique avec une intensité de courant de 2A, on obtient une destruction pratiquement complète de l'acide citrique en 190min.

**Exemple 3.**

On suit le même mode opératoire que dans l'exemple 2, mais la solution à traiter contient 2mol/l d'acide nitrique au lieu de 2mol/l d'acide sulfurique.

Dans ce cas, il est nécessaire d'opérer pendant une durée plus longue pour obtenir la destruction complète de l'acide citrique. Ainsi, le rendement faradique en milieu sulfurique à 2mol/l est de 75% et il est nettement supérieur à celui que l'on obtient en milieu nitrique à 2mol/l qui est de 60%. Ceci peut s'expliquer par la réduction des ions $NO_3^-$ sur la cathode qui conduit à la production d'oxydes $NO_x$ solubles en milieu nitrique et oxydables par $Co^{3+}$.

**Exemple 4.**

Dans cet exemple, on étudie l'influence de la concentration en acide sulfurique de la solution aqueuse sur le rendement faradique.

On utilise dans tous les cas 1l de solution aqueuse ayant une concentration en acide sulfurique qui varie de 0 à 6mol/l, une concentration en acide citrique de 0,1mol/l et une concentration en nitrate de cobalt (II) de 0,1 mol/l.

On réalise l'électrolyse à une température de 20°C, dans le réacteur de traitement électrolytique de l'exemple 1 qui comprend une anode et une cathode en titane platiné ayant toutes deux une surface de 2,16dm$^2$, en agitant constamment par la pompe, et en utilisant une intensité de courant de 40 A.

Dans chaque cas, on détermine le rendement faradique R, qui est le rapport du nombre de Coulombs utilisés sur le nombre de Coulombs nécessaire pour détruire une molécule organique. Il correspond à la formule suivante :

$$R = \frac{n \times x \times 96490 \times 100}{I \times t} \text{ en \%}$$

dans laquelle :
- n est le nombre de molécules organiques détruites au bout du temps t,
- x est le nombre d'électrons mis en jeu dans la demi-équation d'oxydation quantitative de la molécule organique (18 pour l'acide citrique, 2 pour l'acide oxalique),
- I est l'intensité d'électrolyse (en A), et
- t est la durée d'électrolyse en (s).

Dans cet exemple, n et t varient d'une expérience à l'autre, et n est déterminé par dosage après électrolyse pendant le temps t.

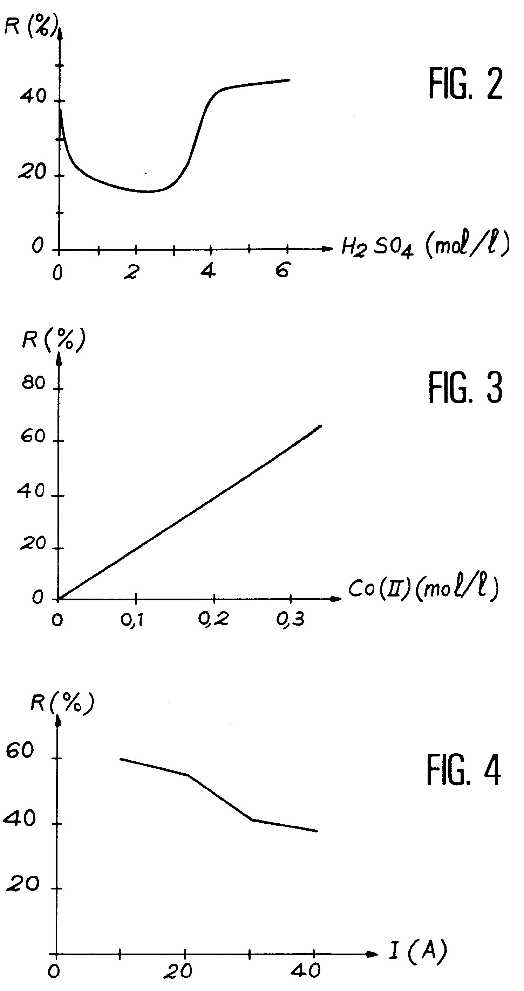

Les résultats obtenus sont donnés sur la figure 2 annexée qui représente le rendement faradique R obtenu (en %) en fonction de la concentration en $H_2SO_4$ (mol/l).

Sur cette figure, on voit que le rendement faradique décroît lorsqu'on augmente la concentration en acide sulfurique de 0 à 2mol/l. A partir de 3mol/l, il augmente à nouveau jusqu'à 5-6mol/l.

On a donc intérêt à utiliser une solution aqueuse ayant une concentration en acide sulfurique soit inférieure à 0,1mol/l, soit supérieure à 3mol/l. Toutefois, l'utilisation d'une concentration en $H_2SO_4$ inférieure à 0,1mol/l est difficilement envisageable à l'échelle industrielle. En effet, lors de l'électrolyse de l'acide citrique en milieu $H_2SO_4$ à 0,02mol/l, le pH augmente et atteint une valeur voisine de 8 au bout de 2h, ce qui provoque la précipitation de l'hydroxyde de cobalt $Co(OH)_2$.

## Exemple 5.

Dans cet exemple, on étudie l'influence de la concentration en cobalt (II) de la solution aqueuse sur le rendement faradique de régénération du Co(III).

Dans cet exemple, on suit le même mode opératoire que dans l'exemple 4 en utilisant un litre de solution aqueuse ayant une concentration en acide sulfurique de 1mol/l, une concentration en acide citrique de 0,1mol/l et une concentration en nitrate de cobalt qui varie de 0 à 0,3mol/l.

On réalise l'électrolyse à une température de 20°C en utilisant une anode et une cathode en titane platiné ayant chacune une surface de 2,16dm² et une intensité de courant de 40A.

Pendant l'électrolyse, on soumet la solution à une agitation constante au moyen d'une pompe.

Dans chaque cas, on détermine le rendement faradique R. Les résultats obtenus sont donnés sur la figure 3 annexée qui représente le rendement faradique R (en %) en fonction de la concentration en cobalt (II) en mol/l.

Sur cette figure, on voit que le rendement faradique est une fonction linéaire de la concentration en cobalt.

## Exemple 6.

Dans cet exemple, on étudie l'influence de la densité du courant d'électrolyse sur le rendement faradique.

On suit le même mode opératoire que dans les exemples 4 et 5 en utilisant un litre de solution aqueuse contenant 1mol/l d'acide sulfurique, 0,1mol/l d'acide citrique et 0,15mol/l de nitrate de cobalt (II).

On réalise l'électrolyse comme dans l'exemple 5, mais en utilisant des intensités de 10, 20, 30 et 40A à une température de 20°C sous une agitation constante assurée par une pompe.

Dans chaque cas, on détermine le rendement faradique R. Les résultats obtenus sont donnés sur la figure 4 qui représente le rendement faradique R (en %) en fonction de l'intensité du courant d'électrolyse (en A).

Sur cette figure, on voit que le rendement faradique décroît lorsque l'intensité du courant d'électrolyse augmente.

Ces résultats comme ceux de l'exemple 5 confirment le fait qu'il faut maintenir le facteur F=I/S(Co(III)) à une valeur inférieure à une valeur limite $F_1$ pour obtenir un rendement faradique de régénération du cobalt voisin de 100%.

Dans le cas de la concentration en cobalt (II), les résultats de l'exemple 5 mettent en évidence que le rendement faradique est proportionnel à la concentration en cobalt tant que cette concentration est telle que $F \leq F_1$.

## Exemple 7

Dans cet exemple, on traite par électrolyse un litre de solution contenant 10 $g.l^{-1}$ d'acide oxalique, 10 $g.l^{-1}$ d'acide citrique, 10 $g.l^{-1}$ d'acide tartrique et 1 $mol.l^{-1}$ d'acide sulfurique.

L'installation de traitement est celle décrite dans l'exemple 1.

L'intensité d'électrolyse est 40A.

La température de la solution est 25 ± 5°C.

Au bout de 30 minutes d'électrolyse, on ajoute 0,5 mol de nitrate cobalteux en cristaux.

On prolonge l'électrolyse pendant 90 minutes, puis on l'arrête. La durée totale d'électrolyse a été 2 heures.

Le pouvoir réducteur des matières organiques est dosé globalement par la même méthode qui a servi à doser l'acide citrique dans l'exemple 1.

On a constaté l'absence de matière organique à l'issue du traitement.

## Revendications

1. Procédé de traitement d'une solution aqueuse contenant en solution ou en suspension au moins une substance organique choisie parmi les germes pathogènes et les agents complexants constitués par des acides carboxyliques, des acides hydroxy carboxyliques ou l'acide éthylène diaminetétracétique, caractérisé en ce qu'il comprend une étape de destruction de cette(ces) substance(s) organique(s) par oxydation, uniquement au moyen de Co(III).

2. Procédé selon la revendication 1, caractérisé en ce que l'on ajoute à la solution aqueuse un sel de cobalt(II) soluble dans cette solution et en ce que l'on soumet la solution à une électrolyse pour générer en continu par électrolyse le Co(III) nécessaire à l'oxydation des substances organiques.

3. Procédé selon la revendication 2, caractérisé en ce que le sel de cobalt est du nitrate de cobalt(II).

4. Procédé selon l'une quelconque des revendications 2 et 3, caractérisé en ce que la quantité de sel de cobalt ajoutée est telle que la concentration en cobalt de la solution soit de 0,05 à 0,5 mol/l.

5. Procédé selon l'une quelconque des revendications 1 à 4 de traitement d'une solution comprenant de plus un composé organique capable de réagir avec le cobalt en formant un précipité, caractérisé en ce que l'on soumet tout d'abord la solution à une électrolyse pour éliminer par oxydation électrochimique le composé organique capable de réagir avec le cobalt.

6. Procédé selon la revendication 5, caractérisé en ce que le composé organique capable de réagir avec le cobalt en formant un précipité est l'acide oxalique.

7. Procédé selon l'une quelconque des revendications 1 à 6, caractérisé en ce que la solution aqueuse de départ a un pH inférieur à 1.

8. Procédé selon la revendication 1, caractérisé en ce qu'il comprend les étapes successives suivantes :
   1°) ajouter à la solution aqueuse de départ contenant en suspension ou en solution au moins une substance organique de l'acide nitrique ou de l'acide sulfurique pour ajuster son pH à une valeur inférieure à 1,
   2°) soumettre la solution ainsi traitée à une électrolyse sous agitation pour éliminer le (les) composé(s) organique(s) éventuellement présents qui seraient capables de réagir avec un sel de cobalt en donnant un précipité de cobalt,
   3°) ajouter un sel de cobalt à la solution ainsi électrolysée, et
   4°) soumettre la solution aqueuse à laquelle on a ajouté le sel de cobalt, à une électrolyse pendant une durée suffisante pour détruire quantitativement la (les) substance(s) organique(s) qu'elle contient.

9. Procédé selon l'une quelconque des revendications 1 8, caractérisé en ce que les substances organiques sont choisies parmi l'acide citrique et l'acide tartrique.

10. Procédé selon l'une quelconque des revendications 1 à 9, caractérisé en ce que la solution aqueuse est constituée par un effluent aqueux provenant d'une installation nucléaire.

## Patentansprüche

1. Verfahren zur Behandlung einer wässrigen Lösung, welche mindestens eine organische Substanz in Lösung oder in Suspension enthält, die unter den pathogenen Keimen und den Komplexbildnern gewählt wird, welche aus Carboxylsäuren, Hydroxycarboxylsäuren oder essigsaurer Tetradiamin-Ethylensäure gebildet wird, dadurch **gekennzeichnet,** daß es einen Abschnitt zur Zerstörung dieser organischen Substanz(en) durch Oxidation, nur mithilfe von Co(III), umfaßt.

2. Verfahren gemäß Anspruch 1, dadurch gekennzeichnet, daß man zur wässrigen Lösung ein in dieser Lösung lösliches Kobalt(II)-Salz zugibt und daß man die Lösung einer Elektrolyse unterzieht, um kontinuierlich durch Elektrolyse das für die Oxidation der organischen Substanzen notwendige Co(III) zu erzeugen.

3. Verfahren gemäß Anspruch 2, dadurch gekennzeichnet, daß das Kobaltsalz ein Kobalt(II)-Nitrat ist.

4. Verfahren gemäß einem der Anspruche 2 und 3, dadurch gekennzeichnet, daß die Menge an zugefügtem Kobaltsalz so ist, daß die Kobaltkonzentration der Lösung zwischen 0,05 und 0,5 mol/l liegt.

5. Verfahren gemäß einem der Ansprüche 1 bis 4 zur Behandlung einer Lösung, welche außerdem eine organische Verbindung umfaßt, die dazu fähig ist, mit dem Kobalt zu reagieren, wobei sie einen Niederschlag bildet, dadurch gekennzeichnet, daß man zuerst die Lösung einer Elektrolyse unterwirft, um durch elektrochemische Oxidation die organische Verbindung, welche dazu fähig ist, mit dem Kobalt zu reagieren, zu beseitigen.

6. Verfahren gemäß Anspruch 5, dadurch gekennzeichnet, daß die organische Verbindung, welche dazu fähig ist, mit dem Kobalt zu reagieren, wobei sie einen Niederschlag bildet, Oxalsäure ist.

7. Verfahren gemäß einem der Ansprüche 1 bis 6, dadurch gekennzeichnet, daß die wässrige Ausgangslösung einen pH-Wert kleiner 1 besitzt.

8. Verfahren gemäß Anspruch 1, dadurch gekennzeichnet, daß es die folgenden, aufeinanderfolgenden Abschnitte umfaßt:
1°) Zufügen einer wässrigen Ausgangslösung, welche in Suspension oder in Lösung mindestens eine der organischen Substanzen Salpetersäure oder Schwefelsäure enthält, um ihren pH-Wert auf einen Wert kleiner 1 einzustellen,
2°) Unterziehen der so behandelten Lösung einer Elektrolyse unter Rühren, um die eventuell anwesende(n) organische(n) Verbindung(en) zu beseitigen, welche dazu fähig wären, mit einem Kobaltsalz zu reagieren, indem sie einen Kobaltniederschlag ergeben,
3°) Zufügen eines Kobaltsalzes zur so elektrolysierten Lösung, und
4°) Unterziehen der wässrigen Lösung, zu welcher man das Kobaltsalz zugefügt hat, einer Elektrolyse, während eines ausreichenden Zeitraums, um quantitativ die organische(n) Substanz(en), die sie enthält, zu zerstören.

9. Verfahren gemäß einem der Ansprüche 1 bis 8, dadurch gekennzeichnet, daß die organischen Substanzen zwischen der Zitronensäure und der Weinsäure ausgewählt werden.

10. Verfahren gemäß einem der Ansprüche 1 bis 9, dadurch gekennzeichnet, daß die wässrige Lösung aus einem Abwasser gebildet wird, daß aus einer kerntechnischen Anlage stammt.

**Claims**

1. Process for the treatment of an aqueous solution containing in solution or in suspension at least one organic substance chosen from pathogenic germs and complexing agents consisting of carboxylic acids, hydroxycarboxylic acids or ethylenediaminetetraacetic acid, characterised in that it comprises a stage of destruction of this (these) organic substance(s) by oxidation solely by means of Co(III).

2. Process according to Claim 1, characterised in that the aqueous solution has added to it a cobalt(II) salt which is soluble in this solution and in that the solution is subjected to an electrolysis to generate continuously by electrolysis the Co(III) needed for the oxidation of the organic substances.

3. Process according to Claim 2, characterised in that the cobalt salt is cobalt(II) nitrate.

4. Process according to either of Claims 2 and 3, characterised in that the quantity of cobalt salt which is added is such that the concentration of cobalt in the solution is from 0.05 to 0.5 mol/l.

5. Process according to any one of Claims 1 to 4 for the treatment of a solution additionally comprising an organic compound capable of reacting with cobalt by forming a precipitate, characterised in that the solution is first of all subjected to an electrolysis to remove by electrochemical oxidation the organic compound capable of reacting with cobalt.

6. Process according to Claim 5, characterised in that the organic compound capable of reacting with cobalt by forming a precipitate is oxalic acid.

7. Process according to any one of Claims 1 to 6, characterised in that the starting aqueous solution has a pH lower than 1.

8. Process according to Claim 1, characterised in that it comprises the following successive stages:
1) adding nitric acid or sulphuric acid to the starting aqueous solution containing at least one organic substance in suspension or in solution, to adjust its pH to a value lower than 1,
2) subjecting the solution thus treated to an electrolysis with stirring to remove the organic compound(s) which may be present, which would be capable of reacting with a cobalt salt by giving a cobalt precipitate,
3) adding a cobalt salt to the solution thus electrolysed, and
4) subjecting the aqueous solution to which the cobalt salt has been added to an electrolysis for a sufficient period to destroy quantitatively the organic substance(s) which it contains.

9. Process according to any one of Claims 1 to 8, characterised in that the organic substances are chosen from citric acid and tartaric acid.

**10.** Process according to any one of Claims 1 to 9, characterised in that the aqueous solution consists of an aqueous effluent originating from a nuclear plant.

FIG. 1

R (%)

FIG. 2

$H_2 SO_4$ (mol/l)

R (%)

FIG. 3

Co(II)(mol/l)

R(%)

FIG. 4

I (A)